(19) Europäisches Patentamt / European Patent Office / Office européen des brevets

(11) **EP 1 521 708 B2**

(12) **NEW EUROPEAN PATENT SPECIFICATION**

After opposition procedure

(45) Date of publication and mention
of the opposition decision:
**18.03.2015 Bulletin 2015/12**

(45) Mention of the grant of the patent:
**09.01.2008 Bulletin 2008/02**

(21) Application number: **03730980.4**

(22) Date of filing: **05.06.2003**

(51) Int Cl.:
**B65D 5/62** (2006.01)       **B65D 65/42** (2006.01)
**B65D 81/24** (2006.01)

(86) International application number:
**PCT/SE2003/000942**

(87) International publication number:
**WO 2004/005147 (15.01.2004 Gazette 2004/03)**

(54) **A METHOD OF PROVIDING A PACKAGE WITH A BARRIER AND THE PACKAGE THUS OBTAINED**

VERFAHREN ZUR BEREITSTELLUNG EINER VERPACKUNG MIT EINER SPERRSCHICHT UND DIE SO ERHALTENE VERPACKUNG

PROCEDE DE PRODUCTION D'UN EMBALLAGE A BARRIERE CONTRE L'OXYGENE ET EMBALLAGE AINSI OBTENU

(84) Designated Contracting States:
**FR GB IT NL**

(30) Priority: **08.07.2002 SE 0202136**
**07.02.2003 SE 0300310**

(43) Date of publication of application:
**13.04.2005 Bulletin 2005/15**

(73) Proprietor: **Tetra Laval Holdings & Finance S.A.**
**1009 Pully (CH)**

(72) Inventors:
• **FLEMMER, Katarina**
**226 49 Lund (SE)**
• **BERLIN, Mikael**
**224 56 Lund (SE)**

• **BUSOLI, Stefano**
**46020 Bondanello-Moglia (IT)**

(74) Representative: **Tetra Pak - Patent Attorneys SE et al**
**AB Tetra Pak**
**Patent Department**
**Ruben Rausings gata**
**22186 Lund (SE)**

(56) References cited:
**WO-A1-00/40404       WO-A1-01/17771**
**WO-A1-02/44040       WO-A1-98/51575**
**WO-A2-02/16484       US-A- 3 438 788**
**US-A- 4 515 836       US-A- 4 573 429**
**US-A- 4 948 015       US-A- 5 652 034**
**US-A- 6 117 541**

**Description**

**TECHNICAL FIELD**

The present invention relates to a method of providing a package for pourable food products with an oxygen barrier. The invention also relates to the package thus obtained.

**BACKGROUND OF THE INVENTION**

Packages for pourable food products need to have oxygen barrier properties in order for the filled and unopened packages to be able to be stored. The required shelf-life and the degree of oxygen barrier needed depends on the type of food product, the type of packaging material, the type of package, the type of opening on the package etc., and also on aspects such as if the package is aseptic and intended for ambient storage or if is not aseptic and thus intended for chilled storage, e.g. In all cases, some degree of oxygen barrier is needed.

Hitherto, it has been common to provide the packaging material, having a polymeric or fibre based core material e.g., with a barrier layer, already before the package is formed from the packaging material. For example, a packaging material having a fibre based core layer and intended for juice packages, has been laminated with an oxygen barrier layer consisting of aluminium foil. Other packaging laminates, intended for pourable food products less sensitive to oxygen than juice, have been suggested to be provided with an oxygen barrier layer by e.g. extrusion or dispersion coating with a polymer that has oxygen barrier properties, such as e.g. a polymer having functional hydroxyl groups, like polyvinyl alcohol or ethylene vinyl alcohol, optionally mixed with a polymer having functional carboxyl groups, like ethylene acrylic acid copolymers (EAA) or ethylene methacrylic acid copolymers (EMAA).

In WO 01/17771 and WO 01/17774, showing dispersion coatings coated onto a carrier layer which is subsequently laminated to the core layer of the packaging material, it has also been shown that the oxygen barrier properties of the dispersion coating can be further enhanced by the incorporation of nano-scale clay particles.

In WO 00/40404, there has been described a thermoplastic film, intended for the packaging of food products, such as wrapping the same in a transparent film, but not intended for the production of dimension stable packages for pourable food. The film described in WO 00/40404 has a coating on at least one surface thereof, which coating comprises a polymeric binder and an additive comprising nano-scale particles. It is stated that the nano-scale particles preferably comprise 5 to 20 weight percent of the additive and that the additive comprises 40 to 90 weight percent of the coating.

One problem of providing the packaging material with an oxygen barrier layer before forming the package is that it is hard or even impossible to control the barrier effect on different parts of the package. For example, an increased need for an oxygen barrier at the seals of the package is difficult to achieve without affecting the rest of the package. Also, due to the overlapping nature of conventional seals in a fibre based packaging laminate, a barrier layer in the laminate may not give the desired barrier properties at the overlap of the same. Moreover, any functional details, such as plastic details or opening devices, pre-applied onto the packaging material or even applied onto the final package, will not exhibit the same oxygen barrier properties as the rest of the material. This is a problem especially in connection with opening devices on aseptic, i.e. sterilised, packages for oxygen sensitive food products such as fruit or vegetable juices e.g. Some package types may also be built up from different parts of different materials, one example being a package that has side walls and a bottom of a fibre based packaging laminate but a top which is made of plastics (Tetra Top®). In this case, it may be difficult to achieve the same or essentially the same oxygen barrier properties on all parts of the package.

One type of opening device that poses a special problem in connection with oxygen barrier properties is a pre-applied, direct injection moulded, plastic cap, especially on an aseptic package. By "pre-applied" means that it is applied onto the finished packaging laminate before the packaging laminate is formed into a package, filled with the pourable food product and sealed. If the package is aseptic, the packaging laminate including the pre-applied opening device is sterilised before the form-fill-and-seal operation, usually by peroxide. The aim of achieving such oxygen barrier properties is rendered extra difficult by the fact that any barrier layer created on the cap at its moulding or in connection therewith, must be able to withstand the sterilisation treatment.

Though it might be possible to provide a plastic cap with barrier properties by producing it from a polymer blend, this has a severe impact on mechanical and sealing properties. Another option might be to incorporate an oxygen scavenger in the plastic but this can also influence the mechanical properties and also the oxygen scavenger has to be approved for food packages and it has to be able to function properly under the conditions of the cap. To our knowledge, no known technique exist which is able to give barrier and at the same time acceptable sealing and mechanical properties in the cap.

US-A-4 515 836 describes coating of a barrier composition onto the outside of an empty, unfilled, packaging container in general, which container have no or very little initial gas barrier. Specifically, a different kind of packaging container, i.e. a plastic bottle, which has insufficient gas barrier properties throughout the whole body of the packaging container is described.

US-A-5 652 034 relates to the outside surface coating of selected parts of a package, which likewise has insufficient gas barrier properties throughout the whole container body. However, it is the easy parts of the outside surface, i.e. the flat panels and the like that are to be coated, and it is accepted that some less accessible parts (usually the plastic moulded top section with threads) remain gas permeable and thereby making outside dispersion coating more cost efficient. Consequently, a lower standard of gas barrier properties of the packaging container as a whole is accepted.

## DESCRIPTION OF THE INVENTION

The present invention aims at presenting a method of providing a package for pourable food products with an oxygen barrier, by which method the above problems are overcome or at least decreased. Specifically, the method according to the invention aims at presenting a method by which selected parts of a package can be provided with an oxygen barrier, independent of any oxygen barrier properties on other parts of the package. Moreover, the method according to the invention aims at presenting a method by which details, especially plastic details, such as opening devices, tops etc, on a package can be provided with an oxygen barrier. The invention should be able to provide such barrier properties without influencing the mechanical and sealing properties. According to one aspect of the invention, this is to be achieved also in case the packaging material, including any plastic details, is to be sterilised before forming and filling of the package.

The invention also aims at presenting the package thus obtained.

These and other objectives are achieved by the method according to the invention, as described in the claims.

It has now been found that surprisingly good oxygen barrier properties can be achieved in a package by post-applying a liquid oxygen barrier composition comprising a polymer dispersion or solution and nano-scale particles, as a coating, onto a selected part of an outside surface of the package. By "post-applying" is meant that the coating is applied onto the finished package, after filling and sealing of the same.

According to one aspect of the Invention, said oxygen barrier composition is applied by a method in the group that consists of spraying, douching, atomising, brushing and immersion of the selected part of the package. In a commercial application, the coating can be applied by spraying by one, two or more spray nozzles e.g., at rates of thousands of packages per hour, for example 4000 - 8000 packages per hour.

According to another aspect of the invention, said oxygen barrier composition is applied at a coating thickness of 1-50 $\mu$m, preferably 1-40 $\mu$m, even more preferred 1-30 $\mu$m, even more preferred 1-20 $\mu$m, even more preferred 5-20 $\mu$m and most preferred 10-15 $\mu$m, measured at dry state.

The package is formed mainly of a fibre based packaging laminate. Also, combinations are conceivable, such as for example a package that has side walls and a bottom of a fibre based packaging laminate but a top that is polymer based (such as Tetra Top® e.g.)

The selected part of the package is at least a part in the group that consists of a seal, an opening device, a plastic detail on the package and a plastic part of the package, such as a plastic top e.g. In an especially preferred embodiment of the invention, the oxygen barrier composition is applied onto the outside of a direct injection moulded opening device (cap), In order to provide the cap with oxygen barrier properties. Here, the outer surface post-applying of the oxygen barrier coating beneficially means that the packaging laminate, including intermittently arranged caps, can be sterilised already before applying the oxygen barrier coating onto the caps, whereby the coating need not be resistant to the sterilising agent. According to this embodiment of the invention, the method includes the steps of:

    (a) injection moulding plastic opening devices in opening holes on a packaging material web,
    (b) forming the packaging material web to a tube while sealing its longitudinal edges to each other and filling the tube with a pourable food product,
    (c) intermittently sealing the tube in transversal seals and cutting the tube in the transversal seals to form cushions,
    (d) folding the cushions to form dimension stabile packages, each having one plastic opening device,

where after said liquid oxygen barrier composition is applied onto the outside of said opening devices In a step (e).

Optionally, the packaging material web including the plastic opening devices is sterilised, preferably by a liquid sterilising agent and even more preferred by peroxide, in a step (f), between steps (a) and (b).

After the application of the coating in step (e) the coating is preferably forcibly dried, preferably by hot air treatment, IR treatment, UV treatment or electron beam treatment of the coating, in a step (g).

According to an alternative embodiment of the invention, the method includes the steps of:

    (a) forming a blank of the packaging material into a tubular packaging capsule, while sealing its longitudinal edges to each other,

(b) moulding a top of plastics, including a device for opening of the filled package, to one end of the tubular capsule,

(c) filling the capsule with a pourable food product,

(d) folding the other end of the capsule into a bottom fold and sealing the fold,

where after said liquid oxygen barrier composition is applied onto the outside of said opening devices in a step (e).

Optionally, the packaging material capsule and the moulded plastic top including the opening device is sterilised in a step (f), between steps (b) and (c), preferably by a gaseous sterilising agent alone or in combination with irradiation sterilisation, more preferably by gaseous hydrogen peroxide in combination with UV irradiation.

According to one aspect of the invention, said polymer dispersion or solution is based on a polymer that has functional hydroxyl groups or functional carboxylic groups. Preferably, said polymer dispersion or solution is based on a polymer in the group that consists of ethylene acrylic acid copolymer, ethylene methacrylic acid copolymer, ethylene vinyl acetate copolymer, ethylene vinyl alcohol copolymer, modified ethylene copolymer, styrene copolymers and combinations thereof.

Said oxygen barrier composition also comprises nano-scale particles, preferably particles in the group that consists of clay particles and silica particles, and combinations thereof.

It is also conceivable to use a UV-EB (electron beam) curable resin.

Surprisingly, it has been found that polymers conventionally used only as adhesives or used in combination with other polymers having barrier properties per se, can provide a coating with surprisingly good barrier properties on their own, when combined with nano-scale particles, i.e. in a solution or dispersion which is essentially without any polymer having oxygen barrier properties per se. Preferred examples of such polymers are polymers having functional carboxylic groups, such as ethylene acrylic acid copolymer and ethylene methacrylic acid copolymer.

Nano-scale particles may be present in the oxygen barrier composition at contents of at least 20 weight %, preferably at least 30 weight % and even more preferred at least 40 weight %, but 60 weight %, more preferred 55 weight % and even more preferred 50 weight % at the most, as calculated on dry matter and the remainder essentially being said polymer.

According to one aspect of the invention, said nano-scale particles are clay particles, in which case said liquid barrier composition exhibits a dry content of 2-20 weight %, preferably 3-16 weight % and even more preferred 5-12 weight % of nano-scale clay particles and polymer. The nano-scale clay particles can include minerals in the group that consists of kaolinite, antigorite, smectite, vermiculite or mica. Specifically, laponite, kaolinite, dickite, nacrite, halloysite, antigorite, chrysolite, pyrophyllite, montmorillonite, hectorite, sodium tetrasilicic mica, sodium taeniolite, commonmica, margarite, vermiculite, phlogophite, xanthophyllite and the like may be mentioned as suitable clay minerals.

The nano-scale clay particles should have an average widest dimension of at least 0.2 $\mu$m, even more preferred 0.4 $\mu$m and most preferred 0.6 $\mu$m but 9 $\mu$m, preferably 8 $\mu$m and even more preferred 7 $\mu$m at the most, and a smallest dimension in the nano-scale range, i.e. 100 nm at the most and preferably 10 nm at the most, usually about 1 nm. The size ranges refer to single clay platelets, i.e. not taking into account that the platelets may form stacks.

It has been found in connection with the development of the invention, that surprisingly good oxygen barrier properties are achieved when there is made use of aluminium magnesium silicate hydrate particles, preferably having an average widest dimension of at least 0.2 $\mu$m, even more preferred 0.4 $\mu$m and most preferred 0.6 $\mu$m, but 5 $\mu$m, preferably 4 $\mu$m and even more preferred 3 $\mu$m at the most and a smallest dimension in the nano-scale range, or synthetic tetrasilisic fluoromica particles, preferably having an average widest dimension of at least 4 $\mu$m, even more preferred 5 $\mu$m and most preferred 6 $\mu$m, but 9 $\mu$m, preferably 8 $\mu$m and even more preferred 7 $\mu$m at the most, and a smallest dimension in the nano-scale range.

It has also been found in connection with the development of the invention, that surprisingly good oxygen barrier properties are achieved when there is made use of colloidal silica particles, exhibiting a particle size of 3-150 nm, preferably 4-100 nm and even more preferred 5-70 nm, which particles are preferably amorphous and/or spherical. The use of colloidal silica particles moreover has the advantage that the liquid barrier composition may be applied at a dry content of 15-40 weight %, preferably 20-35 weight % and even more preferred 24-31 weight %, whereby the demand on forcible drying is decreased.

Optionally, the composition may also comprise an additive for increasing the resistance to scratching of the coating. Alternatively, or in combination, the coating may be treated to exhibit increased resistance to scratching.

According to a preferred embodiment of the invention, the post-applied oxygen barrier coating according to the invention is applied in two or more steps, preferably three or more steps, to form a coating that comprises two or more, preferably three or more part layers. Between each coating step, the resulting coating is dried or cured, preferably by a treatment in the group that consists of hot air treatment, IR treatment, UV treatment or electron beam treatment of the coating or any combination of such treatments. Treatments such as UV or electron beam treatments will also result in a sterilisation taking place.

It has been found that the stepwise coating allows for a relatively thick, but still uniform coating, that is uniformly dried/cured throughout its thickness.

According to another preferred embodiment of the invention, it has been found that the wetting and adhesion is surprisingly improved if a first part coating, in direct contact with the object to be provided with an oxygen barrier, is composed of a coating polymer dispersion or solution, that is essentially free from any nano-scale particles. The second part coating should then preferably be composed of a coating polymer dispersion or solution, but including nano-scale particles, to provide for the oxygen barrier effect. Finally, a third part coating is applied, that again is preferably composed of a coating polymer dispersion or solution, that is essentially free from any nano-scale particles. This final and outermost part coating layer serves as a protection against moist and scratching etc. The first, second and third part coatings are preferably based on the same type of polymer dispersion or solution, of the same or different qualities. Between each coating step, the resulting coating is dried or cured, preferably by a treatment in the group that consists of hot air treatment, IR treatment, UV treatment or electron beam treatment of the coating or any combination of such treatments. Optionally, the coating is forcibly dried between the different coating steps and cured at the end, when all part coatings have been applied. It is also conceivable that the first, second and/or third part coatings, preferably the second part coating comprising nano-scale particles, are applied in two or more steps, with intermediate drying or curing.

The coating may have a total coating thickness of 1-50 $\mu$m, preferably 1-40 $\mu$m, even more preferred 1-30 $\mu$m, even more preferred 1-20 $\mu$m, even more preferred 5-20 $\mu$m and most preferred 10-15 $\mu$m, measured at dry state. Part coatings, if several coating steps are used, suitably have a thickness of 1-20 $\mu$m, even more preferred 1-10 $\mu$m, even more preferred 1 -5 $\mu$m and most preferred 1-3 $\mu$m, measured at dry state.

## DESCRIPTION OF THE DRAWINGS

In the following, the invention will be described in detail with reference to a preferred embodiment and to the drawings, of which:

> Fig. 1 is showing a flow chart of a production line according to a preferred embodiment of the invention,
> Fig. 2 is showing a first package including an opening device, as produced in the process line of Fig. 1,
> Fig. 3 is showing a second fibre based package including a polymeric top.

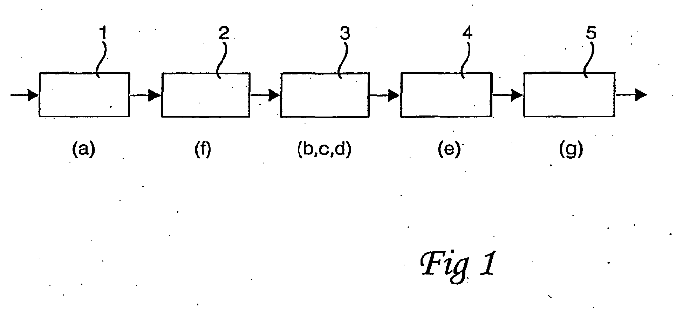

In the flow chart of Fig. 1, the box 1 symbolises apparatus for intermittently pre-applying opening devices onto a packaging laminate web, at pre-made opening holes in the web, in a step (a). Known apparatuses 1 of this kind comprise apparatuses for direct Injection moulding of a polymeric cap including a pouring rim and an optionally hinged lid for opening and closing the opening device e.g. If the package including the opening device is aseptic, the sterility is broken at the first opening of the opening device, as the lid is severed from the rim.

In step (f), the packaging laminate web, including the opening devices, is passed through sterilising equipment 2, where it is sterilised by liquid or vaporised peroxide e.g.

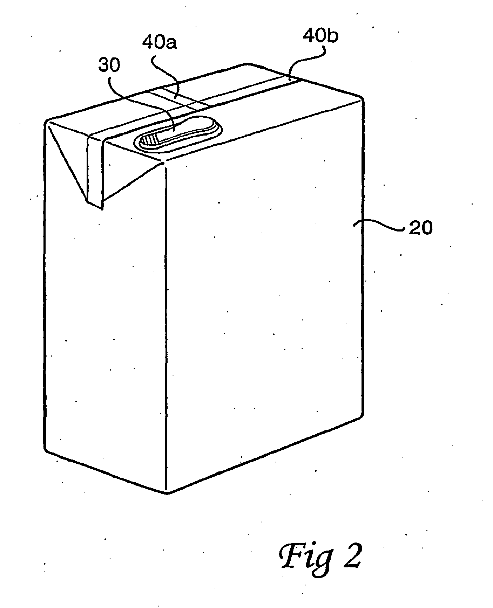

In steps (b), (c), (d) the packaging laminate web is formed, filled and sealed in form-fill-seal equipment 3 of conventional type, to produce brick or tetrahedron shaped packages 20, each having one opening device 30 and longitudinal and transversal seals 40a and 40b, respectively, as shown in detail in Fig. 2.

In step (e), the packages are passed through an apparatus 4 for post-application of a liquid oxygen barrier composition comprising a polymer dispersion or solution and nano-scale particles, onto the outside of the opening device 30 and/or the seals 40a, 40b of the package. The apparatus 4 could comprise any suitable means for applying the dispersion or solution, such as one or more spray guns, atomising means, a bath for immersion of the package or part of the package, douching means, brushing means etc.

After step (e), the post-applied coating is dried or cured in a step (g) in a drying or curing apparatus 5, which for example may comprise means for hot air treatment, IR treatment, UV treatment or electron beam treatment of the coating.

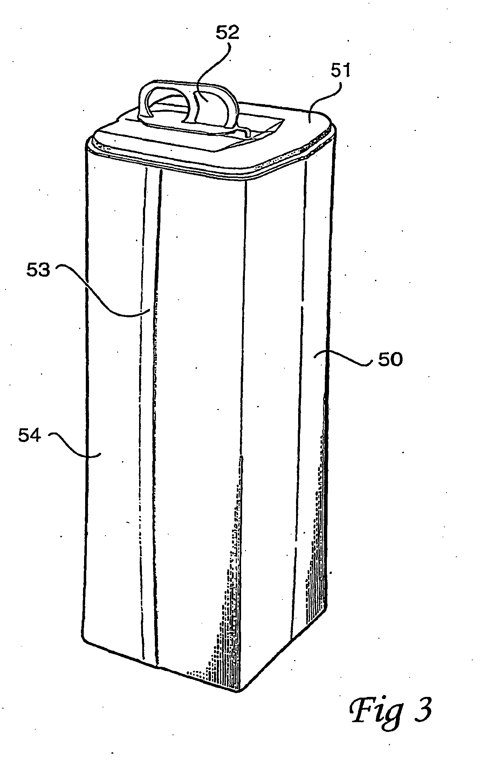

Fig. 3 is showing one example of a package 50 of the Tetra Top® type, having a bottom and side walls 54 of a fibre based packaging laminate with a longitudinal seal 53 and a bottom seal (not shown). The top is a polymeric top 51 including an opening device 52. A post-applied oxygen barrier coating according to the invention coats the top 51 including the opening device 52. Many other types of opening devices can be contemplated, e.g. a screw cap.

## EXAMPLES

In the experimental series, the following polymers and nano-scale particles were tested:

*Nanoclay (Montmorillonite)*

> *Reference:* Cloisite-Na (Southern Clay Products, Inc., Texas, USA), 3 % dispersion in water, size 200 - 1000 nm, CEC: 92 meq/100g.

KunipiaF (Aluminium Magnesium Silicate Hydrate; Kunimine Industries Co., Ltd., Tokyo, Japan), 3 % dispersion in water, size 0.6-3 $\mu$m, CEC 119 meq/100g.

### Nanoclay (Synthetic)

Somasif ME-100 (Synthetic Swellable Tetrasilisic Fluoromica; CO-OP Chemical. Co., Ltd., Tokyo, Japan), 8 % dispersion in water, size 6-7 $\mu$m, CEC 120 meq/100g.

### Colloidal Silica ($SiO_2$):

Bindzil 40/170 (Eka Chemicals, Bohus, Sweden), 40 % dispersion in water, size 20 nm.

Bindzil 30/220 NH3 (Eka Chemicals, Bohus, Sweden), 30 % dispersion in water, size 15 nm.

### Polymeric binders:

Epotal 2343, (Ethylene Acrylic Acid copolymer, BASF, Germany)
Barritech YP2, (Ethylene Acrylic Acid copolymer, BimKemi, Sweden)

## Example 1

Dispersions of EAA copolymer and nano-scale particles were mixed together. The resulting dispersions were applied on OPET film (Melinex 800, DuPont, 36 $\mu$m) in a Hirano lab coater (1 m/min) and dried at 150 °C. Coating thickness was 5 $\mu$m dry. Table 1 is showing the resulting oxygen barriers of the coating (barrier effect of the OPET film taken out of account).

Table 1

| Sample | Filler/Binder, % | % RH | Coat oxygen transmission, cc/m$^2$/24h/5$\mu$m P = 1 atm |
|---|---|---|---|
| CloisiteNa/epotal *reference* | 40/60 | 50 | No barrier |
| KunipiaF/epotal | 40/60 | 0 | 99 |
| KunipiaF/epotal | 40/60 | 50 | 159 |
| KunipiaF/epotal | 40/60 | 100 | 420 |
| KunipiaF/YP2 | 40/60 | 50 | 111 |
| Somasif/epotal | 40/60 | 0 | 62 |
| Somasif/epotal | 40/60 | 50 | 62 |
| Somasif/epotal | 40/60 | 100 | 120 |
| Bindzil/epotal (40/170) | 40/60 | 50 | 419 |
| Bindzil/epotal (40/170) | 50/50 | 50 | 648 |
| Bindzil/epotal (40/170) | 60/40 | 50 | No barrier |
| Bindzil/epotal (30/220) | 40/60 | 50 | No barrier |
| Bindzil/epotal (30/220) | 50/50 | 50 | 648 |
| Bindzil/epotal (30/220) | 60/40 | 50 | 1332 |

For a comparison, the barriers shown in Table 2 of WO 00/40404 have been calculated in the same unit as used in Table 1 above:

Table 2

| Film | Coat oxygen transmission in cc/645,2cm$^2$/24h/0.00254cm | Coat oxygen transmission in cc/m$^2$/24h/5 μm |
|---|---|---|
| SC96-034 | 95 | 31166 |
| SC96-035 | 78 | 16333 |
| SC96-036 | 46 | 5731 |
| SC96-037 | 28 | 2841 |
| SC96-038 | 9 | 764 |

It can be concluded that the results according to the present invention are surprisingly much better than the results achieved in WO 00/40404 for similar dispersions when using the preferred nano-scale particles according to the present invention.

Moreover, it can be concluded that the oxygen barrier of a dispersion including Somasif ME-100 particles seems to be less affected by increased humidity, at least up to 50 % RH, which is a major advantage in the present application of the barrier.

**Example 2**

Oxygen transmission was measured per package, for six 1000 ml, aseptic, brick shaped packages (Tetra Brik®) formed from a packaging laminate including aluminium foil as oxygen barrier and provided with one direct injection moulded opening device (cap) per package. Thereafter, the caps were coated with oxygen barrier by airbrush and dried in a heating cabinet at 90°C for approximately 1-5 minutes. The coating had a thickness of 5-10 μm. After testing the oxygen transmission of the packages having coated caps, the caps were subjected to tap water washing for 4 hours, where after the remaining oxygen barrier was tested again. Table 3 shows the results after coating and after washing of the coated caps as per cent improvement. Oxygen transmission was measured as cc/package/24h, 50% RH, p=0.21 atm, average for seven packages. The improvement was calculated as

$$Improvement = 100 - 100 \times (OTR_{cc} - OTR_{ref})/(OTR_c - OTR_{ref}),$$

where

$OTR_{ref} =$ Oxygen Transmission for the package without cap
$OTR_c =$ Oxygen Transmission for the package having an uncoated cap
$OTR_{cc} =$ Oxygen Transmission for the package having a coated cap (and washed if so)

Table 3

| Coat | Filler/Binder, % | Improvement OTR, coat, % | Improvement OTR, coat + wash, % |
|---|---|---|---|
| KunipiaF/epotal | 40/60 | 46.3 | 44.3 |

**Example 3**

Oxygen transmission was measured per package, for Tetra Top® packages construed in essence according to Fig. 3. The polymeric (LDPE) top was coated with three part coatings, with intermediate drying in between:

1. Pure ethylene acrylic acid copolymer,
2. Ethylene acrylic acid copolymer comprising nano-scale clay particles,
3. Pure ethylene acrylic acid copolymer.

It was found that the first part coating layer provided for a good wetting and a good adhesion on the polymeric top that was coated. The second part coating provided for improved oxygen barrier properties, but the coating had a milky look even after drying and did not withstand water and scratching. However, when the third part layer was applied and dried, it was surprisingly found that the entire coating became clear and that it was able to withstand moist and scratching.

The oxygen barrier transmission was reduced from 0.30 $cm^3/m^2$ and 24 h (uncoated reference) to 0.12 - 0.15 $cm^3/m^2$ and 24 h, thanks to the three part coating, at the conditions 0.21 atm, 23 °C and 50 % RH.

**Claims**

1. A method of providing a package (20, 50) for pourable food products, with an oxygen barrier, formed mainly of a fibre based packaging laminate, **characterised in that** it comprises the step (e) of applying, after filling and sealing of the package, a liquid oxygen barrier composition comprising a polymer dispersion or solution and nano-scale particles, as a coating, onto an outside surface of a selected part of the package, which selected part is at least a part in the group that consists of a seal (40a, 40b, 53), an opening device (30, 52), a plastic detail on the package and a plastic part (51) of the package.

2. A method according to claim 1, **characterised in that** said oxygen barrier composition is applied by a method in the group that consists of spraying, douching, atomising, brushing and immersion of the selected part of the package.

3. A method according to claim 1 or 2, **characterised in that** said coating is forcibly dried or cured (g), preferably by a treatment in the group that consists of hot air, IR, UV and electron beam treatment or combinations thereof.

4. A method according to any one of claims 1-3, **characterised in that** said barrier composition is applied in two or more steps, preferably three or more steps, to yield two or more, preferably three or more part coating layers in the coating, and **in that** the part coating layers are dried and/or cured between the coating steps.

5. A method according to any one of the preceding claims, ch a r a cte r i sed in that said oxygen barrier composition is applied at a total coating thickness of 1-50 $\mu$m, preferably 1-40 $\mu$m, even more preferred 1-30 $\mu$m, even more preferred 1-20 $\mu$m, even more preferred 5-20 $\mu$m and most preferred 10-15 $\mu$m, measured at dry state.

6. A method according to any one of the preceding claims, **characterised in that** said polymer dispersion or solution is based on a polymer which has functional hydroxyl groups or functional carboxylic groups.

7. A method according to any one of claims 1-6, **characterised in that** said polymer dispersion or solution is based on a polymer in the group that consists of ethylene acrylic acid copolymers, ethylene methacrylic acid copolymers, ethylene vinyl acetate copolymers, ethylene vinyl alcohol copolymer, modified ethylene copolymer, styrene copolymers and combinations thereof.

8. A method according to any one of the preceding claims, **characterised in that** said nano-scale particles are in the group that consists of clay particles and silica particles, and combinations thereof.

9. A method according to any one of the preceding claims, **characterised in that** said nano-scale particles are present in the oxygen barrier composition at a content of at least 20 weight %, preferably at least 30 weight % and even more preferred at least 40 weight %, but 60 weight %, more preferred 55 weight % and even more preferred 50 weight % at the most, as calculated on dry matter and the remainder essentially being said polymer.

10. A method according to any one of the preceding claims, **characterised in that** said nano-sca le particles are clay particles and that said liquid barrier composition has a dry content of 2-20 weight %, preferably 3-16 weight % and even more preferred 5-12 weight %.

11. A method according to any one of claims 8-10, **characterised in that** said nano-scale clay particles have an average widest dimension of at least 0.2 $\mu$m, even more preferred 0.4 $\mu$m and most preferred 0.6 $\mu$m but 9 $\mu$m, preferably 8 $\mu$m and even more preferred 7 $\mu$m at the most, and a smallest dimension in the nano-scale range.

12. A method according to any one of claims 8-11, **characterised in that** said nano-scale clay particles are particles in the group that consists of aluminium magnesium silicate hydrate particles, preferably having an average widest dimension of at least 0.2 $\mu$m, even more preferred 0.4 $\mu$m and most preferred 0.6 $\mu$m, but 5 $\mu$m, preferably 4 $\mu$m and even more preferred 3 $\mu$m at the most and a smallest dimension in the nano-scale range, and synthetic tetrasilisic fluoromica particles, preferably having an average widest dimension of at least 4 $\mu$m, even more preferred 5 $\mu$m and most preferred 6 $\mu$m, but 9 $\mu$m, preferably 8 $\mu$m and even more preferred 7 $\mu$m at the most, and a smallest dimension in the nano-scale range.

13. A method according to any one of claims 1-9, **characterised in that** said nano-scale particles are silica particles and that said liquid barrier composition has a dry content of 15-40 weight %, preferably 20-35 weight % and even more preferred 24-31 weight %.

14. A method according to any one of claims 1-9 or 13, **characterised in that** said nano-scale silica particles are colloidal $SiO_2$ particles exhibiting a particle size of 3-150 nm, preferably 4-100 nm and even more preferred 5-70 nm, which particles are preferably amorphous and/or spherical.

15. A method according to any one of claims 4-14, **characterised in that** a first part coating layer is applied on the selected, uncoated part of the outside surface of the package, which first part coating layer is composed of a polymer dispersion or solution that is essentially free from nano-scale particles, where after said first part coating layer is dried and/or cured and said oxygen barrier composition comprising nano-scale particles is applied as a second part coating that thereafter is dried and/or cured.

16. A method according to claim 15, **characterised in that** a third part coating layer is applied on the selected part of the outside surface of the package, that has been coated with the oxygen barrier composition second part coating, which third part coating layer is composed of a polymer dispersion or solution that is essentially free from nano-scale particles, where after said third part coating layer is dried and/or cured.

17. A method according to claim 4, 15 or 16 above, **characterised in that** said part coating layers each have a thickness of 1-20 $\mu$m, preferably 1-10 $\mu$m, even more preferred 1-5 $\mu$m and most preferred 1-3 $\mu$m, measured at dry state.

18. A method according to any one of the preceding claims, **characterised in that** it is preceded by the steps of:

(a) injection moulding plastic opening devices in opening holes on a packaging material web,
(b) forming the packaging material web to a tube while sealing its longitudinal edges to each other and filling the tube with a pourable food product,
(c) intermittently sealing the tube in transversal seals and cutting the tube in the transversal seals to form cushions,
(d) folding the cushions to form dimension stable packages, each having one plastic opening device, where after said liquid oxygen barrier composition is applied onto the outside of said opening devices in said step (e).

19. A method according to claim 18 **characterised in** a step (f), between steps (a) and (b), in which step (f) the packaging material web including the plastic opening devices is sterilised, preferably by a liquid sterilising agent and even more preferred by peroxide, to provide an aseptic package (20).

20. A method according to anyone of claims 1-17, **char acterised in** that it is preceded by the steps of:

(a) forming a blank of the packaging material into a tubular packaging capsule, while sealing its longitudinal edges to each other,
(b) moulding a top of plastics, including a device for opening of the filled package, to one end of the tubular capsule,
(c) filling the capsule with a pourable food product,
(d) folding the other end of the capsule into a bottom fold and sealing the fold,
where after said liquid oxygen barrier composition is applied onto the outside of said opening devices in a step (e).

21. A method according to claim 20, **characteri sedin** a step (f), between steps (b) and (c), in which step (f) the packaging material capsule and the moulded plastic top including the opening device is sterilised, preferably by a gaseous sterilising agent alone or in combination with irradiation sterilisation, more preferably by gaseous hydrogen peroxide in combination with UV irradiation.

22. A filled and sealed package (20, 50) for a pourable food product, having an oxygen barrier, formed mainly of a fibre based packaging laminate, **characterised in that** it exhibits a coating, applied after filling and sealing of the package, on a selected part of an outside surface of the package, which coating is composed of a dried liquid oxygen barrier composition comprising a polymer dispersion or solution and nano-scale particles, and which selected part is at least a part in the group that consists of a seal (40a, 40b, 53), an opening device (30, 52), a plastic detail on the package and a plastic part (51) of the package.

**23.** A package according to claim 22, **characterised in that** said coating is composed of two or more, preferably three or more part coating layers.

**24.** A package according to claim 22 or 23, **characterised in that** said coating has a total thickness of 1-50 $\mu$m, preferably 1-40 $\mu$m, even more preferred 1-30 $\mu$m, even more preferred 1-20 $\mu$m, even more preferred 5-20 $\mu$m and most preferred 10-15 $\mu$m, measured at dry state.

**25.** A package according to any one of claims 22-24, **characterised in that** said package (20, 50) is aseptic.

**26.** A package according to any one of claims 22-25, **characterised in that** said polymer dispersion or solution is based on a polymer that has functional hydroxyl groups or functional carboxylic groups.

**27.** A package according to any one of claims 22-26, **characterised in that** said polymer dispersion or solution is based on a polymer in the group that consists of ethylene acrylic acid copolymer, ethylene methacrylic acid copolymer, ethylene vinyl acetate copolymer, ethylene vinyl alcohol copolymer, modified ethylene copolymer, styrene copolymers and combinations thereof.

**28.** A package according to any one of claims 22-27, **characterised in that** said nano-scale particles are in the group that consists of clay particles and silica particles, and combinations thereof.

**29.** A package according to any one of claims 22-28, **characterised in that** said nano-scale particles are present in the oxygen barrier composition at a content of at least 20 weight %, preferably at least 30 weight % and even more preferred at least 40 weight %, but 60 weight %, more preferred 55 weight % and even more preferred 50 weight % at the most, as calculated on dry matter and the remainder essentially being said polymer.

**30.** A package according to claim 28 or 29, **characterised in that** said nano-scale clay particles have an average widest dimension of at least 0.2 $\mu$m, even more preferred 0.4 $\mu$m and most preferred 0.6 $\mu$m but 9 $\mu$m, preferably 8 $\mu$m and even more preferred 7 $\mu$m at the most, and a smallest dimension in the nano-scale range.

**31.** A package according to any one of claims 28-30, **characterised in that** said nano-scale clay particles are particles in the group that consists of aluminium magnesium silicate hydrate particles, preferably having an average widest dimension of at least 0.2 $\mu$m, even more preferred 0.4 $\mu$m and most preferred 0.6 $\mu$m, but 5 $\mu$m, preferably 4 $\mu$m and even more preferred 3 $\mu$m at the most and a smallest dimension in the nano-scale range, and synthetic tetrasilisic fluoromica particles, preferably having an average widest dimension of at least 4 $\mu$m, even more preferred 5 $\mu$m and most preferred 6 $\mu$m, but 9 $\mu$m, preferably 8 $\mu$m and even more preferred 7 $\mu$m at the most, and a smallest dimension in the nano-scale range.

**32.** A package according to claim 28, **characterised in that** said nano-scale silica particles are colloidal $SiO_2$ particles exhibiting a particle size of 3-150 nm, preferably 4-100 nm and even more preferred 5-70 nm, which particles are preferably amorphous and/or spherical.

**33.** A package according to claim 23 and optionally any one of claims 28-32, **characterised in** a first part coating layer in direct contact with the selected part of the outside surface of the package, which first part coating layer is composed of a dried polymer dispersion or solution that is essentially free from nano-scale particles, and **in that** said oxygen barrier composition coating comprising nano-scale particles constitutes a second part coating on top of the first part coating.

**34.** A package according to claim 33, **characterised in** a third part coating layer, on top of the oxygen barrier composition coating comprising nano-scale particles on the selected part of the outside surface of the package, which third part coating layer is composed of a dried polymer dispersion or solution that is essentially free from nano-scale particles.

**35.** A package according to claim 23, 33 or 34 above, **characterised in that** said part coating layers each have a thickness of 1-20 $\mu$m, preferably 1-10 $\mu$m, even more preferred 1-5 $\mu$m and most preferred 1-3 $\mu$m, measured at dry state.

**Patentansprüche**

1. Verfahren zur Bereitstellung einer Verpackung (20, 50) für fließfähige Nahrungsmittel mit einer Sauerstoffsperre, hauptsächlich gebildet aus einem faserhaltigen Verpackungslaminat, **dadurch gekennzeichnet, dass** es, nach dem Befüllen und Versiegeln der Verpackung, den Schritt (e) des Aufbringens einer flüssigen Sauerstoffsperrzusammensetzung umfasst, die eine Polymerdispersion oder -lösung und nanoskalige Teilchen enthält, als Beschichtung auf einer Außenfläche eines ausgewählten Teils der Verpackung, wobei der ausgewählte Teil zumindest ein Teil aus der Gruppe ist, die aus einer Versiegelung (40a, 40b, 53), einer Öffnungsvorrichtung (30, 52), einem Kunststoffelement auf der Verpackung und einem Kunststoffteil (51) der Verpackung besteht.

2. Verfahren nach Anspruch 1, **dadurch gekennzeichnet, dass** die Sauerstoffsperrzusammensetzung mittels eines Verfahrens aus der Gruppe bestehend aus Sprühen, Duschen, Zerstäuben, Bürsten und Eintauchen des ausgewählten Teils der Verpackung aufgebracht wird.

3. Verfahren nach Anspruch 1 oder 2, **dadurch gekennzeichnet, dass** die Beschichtung zwangsgetrocknet oder ausgehärtet (g) wird, bevorzugt durch eine Behandlung aus der Gruppe bestehend aus Heißluft-, Infrarot-, UV- und Elektronenstrahlbehandlung oder Kombinationen hieraus.

4. Verfahren nach einem der Ansprüche 1 bis 3, **dadurch gekennzeichnet, dass** die Sperrzusammensetzung in zwei oder mehr Schritten aufgebracht wird, bevorzugt drei oder mehr Schritte, um zwei oder mehr, bevorzugt drei oder mehr Teilbeschichtungsschichten in der Beschichtung zu erzielen, und dass die Teilbeschichtungsschichten zwischen den Beschichtungsschritten getrocknet und/oder ausgehärtet werden.

5. Verfahren nach einem der vorhergehenden Ansprüche, **dadurch gekennzeichnet, dass** die Sauerstoffsperrzusammensetzung mit einer Gesamtschichtdicke von 1 - 50 $\mu$m, bevorzugt 1 - 40 $\mu$m, bevorzugter 1 - 30 $\mu$m, noch bevorzugter 1 - 20 $\mu$m, noch bevorzugter 5 - 20 $\mu$m und am bevorzugtesten 10 - 15 $\mu$m, gemessen im Trockenzustand, aufgetragen wird.

6. Verfahren nach einem der vorhergehenden Ansprüche, **dadurch gekennzeichnet, dass** die Polymerdispersion oder -lösung auf einem Polymer basiert, das funktionale Hydroxylgruppen oder funktionale Carboxylgruppen hat.

7. Verfahren nach einem der Ansprüche 1 - 6, **dadurch gekennzeichnet, dass** die Polymerdispersion oder -lösung auf einem Polymer aus der Gruppe bestehend aus Ethylenacrylsäurecopolymeren, Ethylenmethacrylsäurecopolymeren, Ethylenvinylacetatcopolymeren, Ethylenvinylalkoholcopolymer, modifiziertem Ethylencopolymer, Styrolcopolymeren und Kombinationen hieraus basiert.

8. Verfahren nach einem der vorhergehenden Ansprüche, **dadurch gekennzeichnet, dass** die nanoskaligen Teilchen aus der Gruppe bestehend aus Tonerdeteilchen und Silikateilchen und Kombinationen hiervon stammen.

9. Verfahren nach einem der vorhergehenden Ansprüche, **dadurch gekennzeichnet, dass** die nanoskaligen Teilchen in der Sauerstoffsperrzusammensetzung in einem Gehalt von wenigstens 20 Gew.-%, bevorzugt wenigstens 30 Gew.-% und noch bevorzugter wenigstens 40 Gew.-% vorhanden sind, jedoch höchstens mit 60 Gew.-%, bevorzugter 55 Gew.-% und noch bevorzugter 50 Gew.-%, berechnet auf die Trockensubstanz, und wobei der Rest im Wesentlichen das Polymer ist.

10. Verfahren nach einem der vorhergehenden Ansprüche, **dadurch gekennzeichnet, dass** die nanoskaligen Teilchen Tonerdeteilchen sind und dass die Flüssigkeitssperrzusammensetzung einen Trockengehalt von 2 - 20 Gew.-%, bevorzugt 3 - 16 Gew.-% und noch bevorzugter 5 - 12 Gew.-% hat.

11. Verfahren nach einem der Ansprüche 8 - 10, **dadurch gekennzeichnet, dass** die nanoskaligen Tonerdeteilchen eine durchschnittliche weiteste Abmessung von mindestens 0,2 $\mu$m, noch bevorzugter 0,4 $\mu$m und am bevorzugtesten 0,6 $\mu$m haben, höchstens jedoch von 9 $\mu$m, bevorzugt 8 $\mu$m und noch bevorzugter 7 $\mu$m, und eine geringste Abmessung im nanoskaligen Bereich.

12. Verfahren nach einem der Ansprüche 8 - 11, **dadurch gekennzeichnet, dass** die nanoskaligen Tonerdeteilchen Teilchen sind aus der Gruppe bestehend aus Aluminiummagnesiumsilikathydratteilchen, bevorzugt mit einer durchschnittlichen weitesten Abmessung von wenigstens 0,2 $\mu$m, noch bevorzugter 0,4 $\mu$m und am bevorzugtesten 0,6 $\mu$m, jedoch höchstens 5 $\mu$m, bevorzugt 4 $\mu$m und noch bevorzugter 3 $\mu$m und einer geringsten Abmessung im nanoskaligen Bereich, und synthetischen tetroxokieselsäurehaltigen Fluoromica-Teilchen, bevorzugt mit einer durchschnittlichen weitesten Abmessung von wenigstens 4 $\mu$m, noch bevorzugter 5 $\mu$m und am bevorzugtesten 6 $\mu$m, jedoch höchstens 9 $\mu$m, bevorzugt 8 $\mu$m und noch bevorzugter 7 $\mu$m und einer geringsten Abmessung im nanoskaligen Bereich.

13. Verfahren nach einem der Ansprüche 1 - 9, **dadurch gekennzeichnet, dass** die nanoskaligen Teilchen Silikateilchen sind und dass die Flüssigkeitssperrzusammensetzung einen Trockengehalt von 15 - 40 Gew.-%, bevorzugt 20 - 35 Gew.-% und noch bevorzugter 24 - 31 Gew.-% hat.

14. Verfahren nach einem der Ansprüche 1 - 9 oder 13, **dadurch gekennzeichnet, dass** die nanoskaligen Silikateilchen kolloidale $SiO_2$-Teilchen sind, die eine Partikelgröße von 3 - 150 nm, bevorzugt 4 - 100 nm und noch bevorzugter 5 - 70 nm vorweisen, wobei die Teilchen bevorzugt amorph und/oder kugelig sind.

15. Verfahren nach einem der Ansprüche 4 - 14, **dadurch gekennzeichnet, dass** eine erste Teilbeschichtungsschicht auf den ausgewählten, unbeschichteten Teil der Außenfläche der Verpackung aufgebracht wird, wobei die erste Teilbeschichtungsschicht aus einer Polymerdispersion oder -lösung besteht, die im Wesentlichen frei von nanoskaligen Teilchen ist, wobei anschließend die erste Teilbeschichtungsschicht getrocknet und/oder ausgehärtet wird und die Sauerstoffsperrzusammensetzung, die nanoskalige Teilchen umfasst, als eine zweite Teilbeschichtung aufgetragen wird, die anschließend getrocknet und/oder ausgehärtet wird.

16. Verfahren nach Anspruch 15, **dadurch gekennzeichnet, dass** eine dritte Teilbeschichtungsschicht auf den ausgewählten Teil der Außenfläche der Verpackung aufgebracht wird, die mit der Sauerstoffsperrzusammensetzung der zweiten Teilbeschichtung beschichtet wurde, wobei sich die dritte Teilbeschichtungsschicht aus einer Polymerdispersion oder -lösung zusammensetzt, die im Wesentlichen frei von nanoskaligen Teilchen ist, wobei anschließend die dritte Teilbeschichtungsschicht getrocknet und/oder ausgehärtet wird.

17. Verfahren nach Anspruch 4, 15 oder 16 oben, **dadurch gekennzeichnet, dass** die Teilbeschichtungsschichten jeweils eine Dicke von 1 - 20 $\mu$m, bevorzugt 1 - 10 $\mu$m, noch bevorzugter 1 - 5 $\mu$m und am bevorzugtesten 1 - 3 $\mu$m, gemessen im Trockenzustand, haben.

18. Verfahren nach einem der vorhergehenden Ansprüche, **gekennzeichnet durch** die ihm vorausgehenden Schritte:

(a) Spritzgießen von Kunststofföffnungsvorrichtungen in Öffnungslöcher auf einer Verpackungsmaterialbahn,
(b) Formen der Verpackungsmaterialbahn zu einem Schlauch, indem ihre Längskanten aneinander gesiegelt werden, und Befüllen des Schlauchs mit einem fließfähigen Nahrungsmittelprodukt,
(c) intermittierendes Versiegeln des Schlauchs in Querversiegelungen und Schneiden des Schlauchs in den Querversiegelungen, um Kissen zu bilden,
(d) Falten der Kissen, um formstabile Verpackungen zu bilden, die jeweils eine Kunststofföffnungsvorrichtung haben,
wobei anschließend die flüssige Sauerstoffsperrzusammensetzung auf die Außenseite der Öffnungsvorrichtungen in Schritt (e) aufgebracht wird.

19. Verfahren nach Anspruch 18, **gekennzeichnet durch** einen Schritt (f), zwischen den Schritten (a) und (b), wobei in Schritt (f) die Verpackungsmaterialbahn, die die Kunststofföffnungsvorrichtungen enthält, sterilisiert wird, bevorzugt **durch** einen flüssigen Sterilisierungswirkstoff und noch bevorzugter **durch** Peroxid, um eine sterile Verpackung (20) bereitzustellen.

20. Verfahren nach einem der Ansprüche 1 - 17, **gekennzeichnet durch** die ihm vorausgehenden Schritte:

(a) Formen eines Rohlings aus Verpackungsmaterial zu einer schlauchförmigen Kapsel, indem dessen Längskanten aneinander gesiegelt werden,
(b) Spritzen eines Kunststoffoberteils, umfassend eine Vorrichtung zum Öffnen der befüllten Verpackung, an ein Ende der schlauchförmigen Kapsel,
(c) Befüllen der Kapsel mit einem fließfähigen Nahrungsmittelprodukt,
(d) Falten des anderen Endes der Kapsel in eine Bodenfalte und Versiegeln der Falte, wonach die flüssige Sauerstoffsperrzusammensetzung auf die Außenseite der Öffnungsvorrichtungen in einem Schritt
(e) aufgebracht wird.

21. Verfahren nach Anspruch 20, **gekennzeichnet durch** einen Schritt (f), zwischen den Schritten (b) und (c), wobei in Schritt (f) die Verpackungsmaterialkapsel und das gegossene Kunststoffoberteil, das die Öffnungsvorrichtung enthält, sterilisiert werden, bevorzugt **durch** einen gasförmigen Sterilisierungswirkstoff allein oder in Kombination mit einer Bestrahlungssterilisation, bevorzugter **durch** gasförmiges Wasserstoffperoxid in Kombination mit UV-Bestrahlung.

22. Befüllte und versiegelte Verpackung (20, 50) für ein gießfähiges Nahrungsmittelprodukt mit einer Sauerstoffsperre, hauptsächlich gebildet aus einem faserbasierten Verpackungslaminat, **dadurch gekennzeichnet, dass** sie eine Beschichtung, die nach dem Befüllen und Versiegeln der Verpackung aufgebracht wird, auf einem ausgewählten Teil einer Außenfläche der Verpackung vorweist, wobei sich die Beschichtung aus einer getrockneten flüssigen Sauerstoffsperrzusammensetzung zusammensetzt, umfassend eine Polymerdispersion oder -lösung und nanoskalige Teilchen, und wobei der ausgewählte Teil wenigstens ein Teil ist aus der Gruppe bestehend aus einer Versiegelung (40a, 40b, 53), einer Öffnungsvorrichtung (30, 52), einem Kunststoffelement auf der Verpackung und einem Kunststoffteil (51) der Verpackung.

23. Verpackung nach Anspruch 22, **dadurch gekennzeichnet, dass** sich die Beschichtung aus zwei oder mehr, bevorzugt drei oder mehr Teilbeschichtungsschichten zusammensetzt.

24. Verpackung nach Anspruch 22 oder 23, **dadurch gekennzeichnet, dass** die Beschichtung eine Gesamtdicke hat von 1 - 50 $\mu$m, bevorzugt 1 - 40 $\mu$m, bevorzugter 1 - 30 $\mu$m, noch bevorzugter 1 - 20 $\mu$m, noch bevorzugter 5 - 20 $\mu$m und am bevorzugtesten 10 - 15 $\mu$m, gemessen im Trockenzustand.

25. Verpackung nach einem der Ansprüche 22 - 24, **dadurch gekennzeichnet, dass** die Verpackung (20, 50) steril ist.

26. Verpackung nach einem der Ansprüche 22 - 25, **dadurch gekennzeichnet, dass** die Polymerdispersion oder -lösung auf einem Polymer basiert, das funktionale Hydroxylgruppen oder funktionale Carboxylgruppen hat.

27. Verpackung nach einem der Ansprüche 22 - 26, **dadurch gekennzeichnet, dass** die Polymerdispersion oder -lösung auf einem Polymer basiert aus der Gruppe bestehend aus Ethylenacrylsäurecopolymer, Ethylenmethacrylsäurecopolymer, Ethylenvinylacetatcopolymer, Ethylenvinylalkoholcopolymer, modifiziertem Ethylencopolymer, Styrolcopolymeren und Kombination hieraus.

28. Verpackung nach einem der Ansprüche 22 - 27, **dadurch gekennzeichnet, dass** die nanoskaligen Teilchen aus der Gruppe bestehend aus Tonerdeteilchen und Silikateilchen und Kombinationen hieraus stammen.

29. Verpackung nach einem der Ansprüche 22-28, **dadurch gekennzeichnet, dass** die nanoskaligen Teilchen in der Sauerstoffsperrzusammensetzung in einem Gehalt vorliegen von wenigstens 20 Gew.-%, bevorzugt wenigstens 30 Gew.-% und noch bevorzugter wenigstens 40 Gew.-%, jedoch höchstens 60 Gew.-%, bevorzugter 55 Gew.-% und noch bevorzugter 50 Gew.-%, auf die Trockenmasse berechnet und wobei der Rest im Wesentlichen das Polymer ist.

30. Verpackung nach Anspruch 28 oder 29, **dadurch gekennzeichnet, dass** die nanoskaligen Tonerdeteilchen eine durchschnittliche weiteste Abmessung haben von wenigstens 0,2 $\mu$m, noch bevorzugter 0,4 $\mu$m und am bevorzugtesten 0,6 $\mu$m, jedoch höchstens 9 $\mu$m, bevorzugt 8 $\mu$m und noch bevorzugter 7 $\mu$m, und eine geringste Abmessung im nanoskaligen Bereich.

31. Verpackung nach einem der Ansprüche 28 - 30, **dadurch gekennzeichnet, dass** die nanoskaligen Tonerdeteilchen Teilchen sind aus der Gruppe bestehend aus Aluminiummagnesiumsilikathydratteilchen, bevorzugt mit einer durchschnittlichen weitesten Abmessung von wenigstens 0,2 $\mu$m, noch bevorzugter 0,4 $\mu$m und am bevorzugtesten 0,6 $\mu$m, jedoch höchstens 5 $\mu$m, bevorzugt 4 $\mu$m und noch bevorzugter 3 $\mu$m und einer geringsten Abmessung im nanoskaligen Bereich, und synthetischen tetroxokieselsäurehaltigen Fluoromica-Teilchen, bevorzugt mit einer durchschnittlichen weitesten Abmessung von wenigstens 4 $\mu$m, noch bevorzugter 5 $\mu$m und am bevorzugtesten 6 $\mu$m, jedoch höchstens 9 $\mu$m, bevorzugt 8 $\mu$m und noch bevorzugter 7 $\mu$m und einer geringsten Abmessung im nanoskaligen Bereich.

32. Verpackung nach Anspruch 28, **dadurch gekennzeichnet, dass** die nanoskaligen Silikateilchen kolloidale $SiO_2$-Teilchen sind, die eine Partikelgröße von 3 - 150 nm, bevorzugt 4- 100 nm und noch bevorzugter 5 - 70 nm haben, wobei die Partikel bevorzugt amorph und/oder kugelig sind.

**33.** Verpackungsbehälter nach Anspruch 23 und gegebenenfalls einem der Ansprüche 28 - 32, **gekennzeichnet durch** eine erste Teilbeschichtungsschicht in direktem Kontakt mit dem ausgewählten Teil der Außenfläche der Verpackung, wobei sich die erste Teilbeschichtungsschicht aus einer getrockneten Polymerdispersion oder -lösung zusammensetzt, die im Wesentlichen frei von nanoskaligen Teilchen ist, und **dadurch**, dass die nanoskalige Teilchen enthaltende Sauerstoffsperrzusammensetzungsbeschichtung eine zweite Teilbeschichtung oben auf der ersten Teilbeschichtung darstellt.

**34.** Verpackung nach Anspruch 33, **gekennzeichnet durch** eine dritte Teilbeschichtungsschicht, oben auf der Sauerstoffsperrzusammensetzungsbeschichtung, umfassend nanoskalige Teilchen auf dem ausgewählten Teil der Außenfläche der Verpackung, wobei die dritte Teilbeschichtungsschicht sich aus einer getrockneten Polymerdispersion oder -lösung zusammensetzt, die im Wesentlichen frei von nanoskaligen Teilchen ist.

**35.** Verpackung nach Anspruch 23, 33 oder 34 oben, **dadurch gekennzeichnet, dass** die Teilbeschichtungsschichten jeweils eine Dicke von 1 - 20 $\mu$m, bevorzugt 1 - 10 $\mu$m, noch bevorzugter 1 - 5 $\mu$m und am bevorzugtesten 1 - 3 $\mu$m haben, gemessen im Trockenzustand.


**Revendications**

**1.** Procédé de fabrication d'un emballage (20, 50) de produits alimentaires versables, doté d'une couche formant barrière à l'oxygène, réalisé principalement à partir d'un laminé d'emballage à base de fibre, **caractérisé en ce qu'**il comprend l'étape (e) consistant à appliquer, après remplissage et fermeture hermétique de l'emballage, une composition liquide de couche formant barrière à l'oxygène comprenant une dispersion ou solution de polymère et des particules nanométriques, sous la forme d'un revêtement, sur la surface extérieure d'une partie sélectionnée de l'emballage, laquelle partie sélectionnée est au moins une partie sélectionnée dans le groupe constitué par une fermeture hermétique (40a, 40b, 53), un dispositif d'ouverture (30, 52), une pièce en plastique sur l'emballage et une partie en plastique (51) de l'emballage.

**2.** Procédé selon la revendication 1, **caractérisé en ce que** ladite composition de couche formant barrière à l'oxygène est appliquée par un procédé choisi dans le groupe constitué par la pulvérisation, le douchage, l'atomisation, l'application au pinceau et l'immersion de la partie sélectionnée de l'emballage.

**3.** Procédé selon la revendication 1 ou 2, **caractérisé en ce que** ledit revêtement est soumis à un séchage ou une cuisson forcé (e) (g), de préférence par un traitement choisi dans le groupe constitué par les traitements à l'air chaud, aux rayonnements IR, UV et par faisceaux d'électron ou des combinaisons de ceux-ci.

**4.** Procédé selon l'une quelconque des revendications 1 à 3, **caractérisé en ce que** ladite composition de couche barrière est appliquée en deux étapes ou plus, de préférence en trois étapes ou plus, pour donner deux ou plus de deux, de préférence trois ou plus de trois couches partielles de revêtement dans le revêtement, et **en ce que** les couches partielles de revêtement sont séchées et/ou cuites entre les étapes d'application du revêtement.

**5.** Procédé selon l'une quelconque des revendications précédentes, **caractérisé en ce que** ladite composition de couche formant barrière à l'oxygène est appliquée à une épaisseur de revêtement totale de 1 à 50 $\mu$m, de préférence de 1 à 40 $\mu$m, de manière encore davantage préférée de 1 à 30 $\mu$m, de manière encore davantage préférée de 1 à 20 $\mu$m, de manière encore davantage préférée 5 à 20 $\mu$m et de manière préférée entre toutes de 10 à 15 $\mu$m, mesurée à l'état sec.

**6.** Procédé selon l'une quelconque des revendications précédentes, **caractérisé en ce que** ladite dispersion ou solution de polymère est basée sur un polymère qui présente des groupes fonctionnels hydroxyles ou des groupes fonctionnels carboxyliques.

**7.** Procédé selon l'une quelconque des revendications 1 à 6, **caractérisé en ce que** ladite dispersion ou solution de polymère est basée sur un polymère choisi dans le groupe qui est constitué par les copolymères de l'acide éthylène acrylique, les copolymères de l'acide éthylène méthacrylique, les copolymères d'éthylène-acétate de vinyle, un copolymère d'éthylène-alcool vinylique, un copolymère d'éthylène modifié, les copolymères de styrène et des combinaisons de ceux-ci.

**8.** Procédé selon l'une quelconque des revendications précédentes, **caractérisé en ce que** lesdites particules nanométriques sont choisies dans le groupe constitué par les particules d'argile et les particules de silice, et une combinaison de celles-ci.

9. Procédé selon l'une quelconque des revendications précédentes, **caractérisé en ce que** lesdites particules nanométriques sont présentes dans la composition de couche formant barrière à l'oxygène à une teneur d'au moins 20 % en poids, de préférence d'au moins 30 % en poids et de manière encore davantage préférée d'au moins 40 % en poids, mais tout au plus de 60 % en poids, de manière davantage préférée de 55 % en poids et de manière encore davantage préférée de 50 % en poids, calculé sur la matière sèche et le reste étant essentiellement ledit polymère.

10. Procédé selon l'une quelconque des revendications précédentes, **caractérisé en ce que** lesdites particules nanométriques sont des particules d'argile et que ladite composition liquide de couche barrière possède une teneur en matière sèche de 2 à 20 % en poids, de préférence de 3 à 16 % en poids et de manière encore davantage préférée de 5 à 12 % en poids.

11. Procédé selon l'une quelconque des revendications 8 à 10, **caractérisé en ce que** lesdites particules d'argile nanométriques présentent une dimension la plus large en moyenne d'au moins 0,2 $\mu$m, de manière encore davantage préférée d'au moins 0,4 $\mu$m et de manière préférée entre toutes d'au moins 0,6 $\mu$m, mais tout au plus de 9 $\mu$m, de préférence de 8 $\mu$m et de manière encore davantage préférée de 7 $\mu$m, et une dimension la plus petite dans la gamme nanométrique.

12. Procédé selon l'une quelconque des revendications 8 à 11, **caractérisé en ce que** lesdites particules d'argile nanométriques sont des particules choisies dans le groupe constitué par les particules de silicate d'aluminium et de magnésium hydraté, de préférence présentant une dimension la plus large en moyenne d'au moins 0,2 $\mu$m, de manière encore davantage préférée d'au moins 0,4 $\mu$m et de manière préférée entre toutes d'au moins 0,6 $\mu$m, mais tout au plus de 5 $\mu$m, de préférence de 4 $\mu$m et de manière encore davantage préférée de 3 $\mu$m, et une dimension la plus petite dans la gamme nanométrique, et des particules synthétiques de fluoromica tétrasilicique, de préférence présentant une dimension la plus large en moyenne d'au moins 4 $\mu$m, de manière encore davantage préférée d'au moins 5 $\mu$m et de manière préférée entre toutes d'au moins 6 $\mu$m, mais tout au plus de 9 $\mu$m, de préférence de 8 $\mu$m et de manière encore davantage préférée de 7 $\mu$m, et une dimension la plus petite dans la gamme nanométrique.

13. Procédé selon l'une quelconque des revendications 1 à 9, **caractérisé en ce que** lesdites particules nanométriques sont des particules de silice et que ladite composition liquide de couche barrière possède une teneur en matière sèche de 15 à 40 % en poids, de préférence de 20 à 35 % en poids et de manière encore davantage préférée de 24 à 31 % en poids.

14. Procédé selon l'une quelconque des revendications 8 à 9 ou 13, **caractérisé en ce que** lesdites particules nanométriques de silice sont des particules de $SiO_2$ colloïdales présentant une taille de particule de 3 à 150 nm, de préférence de 4 à 100 nm et de manière encore davantage préférée de 5 à 70 nm, lesquelles particules sont de préférence amorphes et/ou sphériques.

15. Procédé selon l'une quelconque des revendications 4 à 14, **caractérisé en ce qu'**une première couche partielle de revêtement est appliquée sur la partie sélectionnée, non revêtue, de la surface extérieure de l'emballage, laquelle première couche partielle de revêtement est composée d'une dispersion ou solution de polymère qui est essentiellement exempte de particules nanométriques, où ladite première couche partielle de revêtement est séchée et/ou cuite et ladite composition de couche formant barrière à l'oxygène comprenant des particules nanométriques est appliquée comme deuxième revêtement partiel, lequel est ensuite séché et/ou cuit.

16. Procédé selon la revendication 15, **caractérisé en ce qu'**une troisième couche partielle de revêtement est appliquée sur la partie sélectionnée de la surface extérieure de l'emballage qui a été revêtue avec le deuxième revêtement partiel à base de la composition de couche formant barrière à l'oxygène, laquelle troisième couche partielle de revêtement est composée d'une dispersion ou solution de polymère qui est essentiellement exempte de particules nanométriques, où ladite troisième couche partielle de revêtement est ensuite séchée et/ou cuite.

17. Procédé selon les revendications 4, 15 ou 16 ci-dessus, **caractérisé en ce que** lesdites couches partielles de revêtement présentent chacune une épaisseur de 1 à 20 $\mu$m, de préférence de 1 à 10 $\mu$m, de manière encore davantage préférée de 1 à 5 $\mu$m et de manière préférée entre toutes de 1 à 3 $\mu$m, mesurée à l'état sec.

**18.** Procédé selon l'une quelconque des revendications précédentes, **caractérisé en ce qu'**il est précédé par les étapes consistant à :

(a) mouler par injection des dispositifs d'ouverture en plastique dans des orifices d'ouverture sur une bande de matériau d'emballage,
(b) former la bande de matériau d'emballage en forme de tube tout en scellant hermétiquement ses bords longitudinaux l'un à l'autre et remplir le tube avec un produit alimentaire versable,
(c) fermer hermétiquement de façon intermittente le tube par des scellements transversaux et couper le tube aux scellements transversaux pour former des coussins,
(d) plier les coussins pour former des emballages de forme stable, chacun ayant un dispositif d'ouverture en plastique,
où ensuite ladite composition de couche formant barrière à l'oxygène est appliquée sur l'extérieur desdits dispositifs d'ouverture dans ladite étape (e).

**19.** Procédé selon la revendication 18, **caractérisé par** une étape (f), entre les étapes (a) et (b), dans laquelle étape (f) la bande de matériau d'emballage comprenant les dispositifs d'ouverture en plastique est stérilisée, de préférence par un agent de stérilisation liquide et de manière encore davantage préférée par du peroxyde, pour fournir un emballage aseptique (20).

**20.** Procédé selon l'une quelconque des revendications 1 à 17, **caractérisé en ce qu'**il est précédé par les étapes consistant à :

(a) former une pièce brute en matériau d'emballage en une capsule d'emballage tubulaire, tout en scellant hermétiquement ses bords longitudinaux l'un à l'autre,
(b) mouler un dessus en plastique, comprenant un dispositif pour ouvrir l'emballage rempli, à une extrémité de la capsule tubulaire,
(c) remplir la capsule avec un produit alimentaire versable,
(d) plier l'autre extrémité de la capsule en un pli de fond et sceller le pli,
où ensuite ladite composition de couche formant barrière à l'oxygène est appliquée sur l'extérieur desdits dispositifs d'ouverture dans une étape (e).

**21.** Procédé selon la revendication 20, **caractérisé par** une étape (f), entre les étapes (b) et (c), dans laquelle étape (f) la capsule en matériau d'emballage et le dessus en plastique moulé comprenant le dispositif d'ouverture sont stérilisés, de préférence par un agent de stérilisation gazeux seul ou en combinaison avec une stérilisation par irradiation, de manière davantage préférée par du peroxyde d'hydrogène gazeux en combinaison avec une irradiation UV.

**22.** Emballage rempli et scellé (20, 50) de produits alimentaires versables, présentant une couche formant barrière à l'oxygène, réalisé principalement à partir d'un laminé d'emballage à base de fibre, **caractérisé en ce qu'**il présente un revêtement, appliqué après remplissage et fermeture hermétique de l'emballage, sur une partie sélectionnée d'une surface extérieure de l'emballage, lequel revêtement est composé d'une composition liquide de couche formant barrière à l'oxygène séchée comprenant une dispersion ou solution de polymère et des particules nanométriques, et laquelle partie sélectionnée est au moins une partie choisie dans le groupe constitué par une fermeture hermétique (40a, 40b, 53), un dispositif d'ouverture (30, 52), une pièce en plastique sur l'emballage et une partie en plastique (51) de l'emballage.

**23.** Emballage selon la revendication 22, **caractérisé en ce que** ledit revêtement est composé de deux ou plus de deux, de préférence de trois ou plus de trois couches partielles de revêtement.

**24.** Emballage selon la revendication 22 ou 23, **caractérisé en ce que** ledit revêtement présente une épaisseur finale totale de 1 à 50 $\mu$m, de préférence de 1 à 40 $\mu$m, de manière encore davantage préférée de 1 à 30 $\mu$m, de manière encore davantage préférée de 1 à 20 $\mu$m, de manière encore davantage préférée de 5 à 20 $\mu$m et de manière préférée entre toutes de 10 à 15 $\mu$m, mesurée à l'état sec.

**25.** Emballage selon l'une quelconque des revendications 22 à 24, **caractérisé en ce que** ledit emballage (20, 50) est aseptique.

**26.** Emballage selon l'une quelconque des revendications 22 à 25, **caractérisé en ce que** ladite dispersion ou solution de polymère est basée sur un polymère qui présente des groupes fonctionnels hydroxyles ou des groupes fonctionnels carboxyliques.

**27.** Emballage selon l'une quelconque des revendications 22 à 26, **caractérisé en ce que** ladite dispersion ou solution de polymère est basée sur un polymère choisi dans le groupe qui est constitué par un copolymère de l'acide éthylène acrylique, un copolymère de l'acide éthylène méthacrylique, un copolymère d'éthylène-acétate de vinyle, un copolymère d'éthylène-alcool vinylique, un copolymère d'éthylène modifié, les copolymères de styrène et des combinaisons de ceux-ci.

**28.** Emballage selon l'une quelconque des revendications 22 à 27, **caractérisé en ce que** lesdites particules nanométriques sont choisies dans le groupe constitué par les particules d'argile et les particules de silice, et une combinaison de celles-ci.

**29.** Emballage selon l'une quelconque des revendications 22 à 28, **caractérisé en ce que** lesdites particules nanométriques sont présentes dans la composition de couche formant barrière à l'oxygène à une teneur d'au moins 20 % en poids, de préférence d'au moins 30 % en poids et de manière encore davantage préférée d'au moins 40 % en poids, mais tout au plus de 60 % en poids, de manière davantage préférée de 55 % en poids et de manière encore davantage préférée de 50 % en poids, calculé sur la matière sèche et le reste étant essentiellement ledit polymère.

**30.** Emballage selon la revendication 28 ou 29, **caractérisé en ce que** lesdites particules d'argile nanométriques présentent une dimension la plus large en moyenne d'au moins 0,2 $\mu$m, de manière encore davantage préférée d'au moins 0,4 $\mu$m et de manière préférée entre toutes d'au moins 0,6 $\mu$m, mais tout au plus de 9 $\mu$m, de préférence de 8 $\mu$m et de manière encore davantage préférée de 7 $\mu$m, et une dimension la plus petite dans la gamme nanométrique.

**31.** Emballage selon l'une quelconque des revendications 28 à 30, **caractérisé en ce que** lesdites particules d'argile nanométriques sont des particules choisies dans le groupe constitué par les particules de silicate d'aluminium et de magnésium hydraté, de préférence présentant une dimension la plus large en moyenne d'au moins 0,2 $\mu$m, de manière encore davantage préférée d'au moins 0,4 $\mu$m et de manière préférée entre toutes d'au moins 0,6 $\mu$m, mais tout au plus de 5 $\mu$m, de préférence de 4 $\mu$m et de manière encore davantage préférée de 3 $\mu$m, et une dimension la plus petite dans la gamme nanométrique, et des particules synthétiques de fluoromica tétrasilicique, de préférence présentant une dimension la plus large en moyenne d'au moins 4 $\mu$m, de manière encore davantage préférée d'au moins 5 $\mu$m et de manière préférée entre toutes d'au moins 6 $\mu$m, mais tout au plus de 9 $\mu$m, de préférence de 8 $\mu$m et de manière encore davantage préférée de 7 $\mu$m, et une dimension la plus petite dans la gamme nanométrique.

**32.** Emballage selon la revendication 28, **caractérisé en ce que** lesdites particules nanométriques de silice sont des particules de SiO$_2$ colloïdales présentant une taille de particule de 3 à 150 nm, de préférence 4 à 100 nm et de manière encore davantage préférée de 5 à 70 nm, lesquelles particules sont de préférence amorphes et/ou sphériques.

**33.** Emballage selon la revendication 23 et éventuellement selon l'une quelconque des revendications 28 à 32, **caractérisé par** une première couche partielle de revêtement en contact direct avec la partie sélectionnée de la surface extérieure de l'emballage, laquelle première couche partielle de revêtement est composée d'une dispersion ou solution de polymère séchée qui est essentiellement exempte de particules nanométriques, et en ce que ledit revêtement à base de la composition de couche formant barrière à l'oxygène comprenant des particules nanométriques constitue un deuxième revêtement partiel sur le dessus du premier revêtement partiel.

**34.** Emballage selon la revendication 33, **caractérisé par** une troisième couche partielle de revêtement, sur le dessus du revêtement à base de la composition de couche formant barrière à l'oxygène comprenant des particules nanométriques sur la partie sélectionnée de la surface extérieure de l'emballage, laquelle troisième couche partielle de revêtement est composée d'une dispersion ou solution de polymère séchée qui est essentiellement exempte de particules nanométriques.

**35.** Emballage selon les revendications 23, 33 ou 34 ci-dessus, **caractérisé en ce que** lesdites couches partielles de revêtement présentent chacune une épaisseur de 1 à 20 $\mu$m, de préférence de 1 à 10 $\mu$m, de manière encore davantage préférée de 1 à 5 $\mu$m et de manière préférée entre toutes de 1 à 3 $\mu$m, mesurée à l'état sec.

Fig 1

*Fig 2*

Fig 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0117771 A
- WO 0117774 A
- WO 0040404 A
- US 4515836 A
- US 5652034 A